# EUROPEAN PATENT APPLICATION

(11) **EP 2 660 940 A1**
(43) Date of publication of application: **06.11.2013**
(21) Application number: 12003039.0
(22) Date of filing: 01.05.2012
(51) Int. Cl.: H02H 3/16, H02H 3/33, H02H 3/347

(54) **Earthed connection detection**

(71) Applicant: Danfoss Drives A/S, 6300 Graasten (DK)
(72) Inventor: Harvest, Nils-Ole, 6430 Nordborg (DK)

(57) **Abstract**

A mechanism is described for determining whether or not a ground connection is properly earthed. The mechanism comprises a current measurement transformer configured to detect the sum of currents flowing through one or more live conductors and a neutral conductor and a module for indicating whether the sum of currents is below a predetermined threshold. An output below the said threshold is indicative of the absence of a ground connection.

## Description

### FIELD OF THE INVENTION

The present invention relates to the detection of the absence of an earthed connection in electrical and electronic circuits.

### BACKGROUND OF THE INVENTION

Ground or earth connections are used in electrical circuits for a wide variety of purposes. Earth or ground connections provide a potential against which other potentials can be referenced. Earth or ground connections also have safety functions, for example for preventing the build up of static electricity and for preventing persons getting electric shock in case of insulation failure. Furthermore, ground connections are often necessary for the correct function of an EMC filter in an electric circuit.

In the context of electrical engineering, the terms "ground" and "earth" typically have the same meaning. The terms are used interchangeably in this document.

In many circumstances, electrical circuits will function regardless of whether a ground or earth connection of the circuit is correctly attached to ground/earth. However, such circuits may be potentially unsafe to a user. Alternatively, or in addition, such circuits may be vulnerable to damage, for example due to transient overvoltage on the mains supply e.g. caused by lightning.

### SUMMARY OF THE INVENTION

The present invention seeks to address at least some of the problems outlined above.

The present invention provides a method comprising: providing AC power from a power supply to a live and neutral conductor of a circuit, wherein the live and neutral conductors are configured to pass through a current measurement transformer; determining the sum of the currents in the live and neutral conductors; and determining whether the sum of the currents is below a first predetermined threshold.

The present invention also provides a circuit comprising: a current measurement transformer configured to detect the sum of currents flowing through a live conductor and a neutral conductor; and a module for indicating whether the sum of currents is below a first predetermined threshold.

A first capacitor may be provided connected between the live conductor and a ground connection and a second capacitor may be provided connected between the neutral conductor and the ground connection. Thus, the circuit may include so-called Y-capacitors, for example provided for EMC purposes. The provision of such Y-capacitors generates an impedance to ground that results in a current passing through the impedance that can be detected at the summing of the currents. In principle, this impedance could be provided in other ways, such as a resistance and so the provision of Y-capacitors as described above is not essential to all forms of the invention.

A first output may be provided that is indicative of whether the sum of currents is below the first predetermined threshold. The first output is typically indicative of whether a ground connection is made and may be provided in many different forms, such as a simple indicator light or alarm.

The invention may include disconnecting the live and neutral conductors from the power supply (for example using a relay) in the event that the sum of currents is below the first threshold. Thus, in some forms of the invention, in the event that the sum of currents indicates that a required ground connection has not been provided, then the circuit may be disconnected from the power supply. This clearly has potential safety advantages.

In addition to determining whether the sum of the currents is below the first threshold, the invention may include determining whether the sum of currents is above a second predetermined threshold. Moreover, a second output may be provided for indicating whether the sum of currents is above the second predetermined threshold. The second output may, for example, be part of the same physical output as the first output (in forms of the invention including such a first output).

In some forms of the invention, the live and neutral conductors may be disconnected from the power supply (for example using a relay) in the event that the sum of currents is above the second threshold.

A plurality of live conductors may be provided. For example, in a three-phase power supply system, three live conductors and one neutral conductor may be provided. The step of determining the sum of the currents may include determining the sum of the currents in the plurality of live conductors and the neutral conductor. In embodiments of the invention including Y-capacitors, the first capacitor referred to above may be implemented by providing a separate capacitor between each of the plurality of live conductors and ground.

The present invention also provides a method comprising: providing AC power from a power supply to one or more live conductors (e.g. three live conductors) and a neutral conductor of a circuit, wherein the one or more live conductors and the neutral conductor are configured to pass through a current measurement transformer; determining the sum of the currents in the one or more live conductors and the neutral conductor; and determining whether the sum of the currents is below a first predetermined threshold.

The present invention further provides a circuit comprising: a current measurement transformer configured to detect the sum of currents flowing through one or more live conductors and a neutral conductor; and a module for indicating whether the sum of currents is below a first predetermined threshold.

### BRIEF DESCRIPTION OF THE DRAWINGS

The invention will now be described in further detail with reference to the following schematic drawings, in which:
Figure 1 is a circuit diagram of a known filter arrangement;
Figure 2 is a block diagram of a known residual current device;
Figure 3 shows a circuit in accordance with an aspect of the present invention;
Figure 4 is a flow chart showing an algorithm in accordance with an aspect of the present invention;
Figure 5 is a flow chart showing an algorithm in accordance with an aspect of the present invention;
Figure 6 shows a circuit diagram used for simulating the present invention;
Figure 7 shows results of a simulation of the circuit of Figure 6;
Figure 8 shows further results of a simulation of the circuit of Figure 6; and
Figure 9 shows a circuit in accordance with an aspect of the present invention.

### DETAILED DESCRIPTION OF THE INVENTION

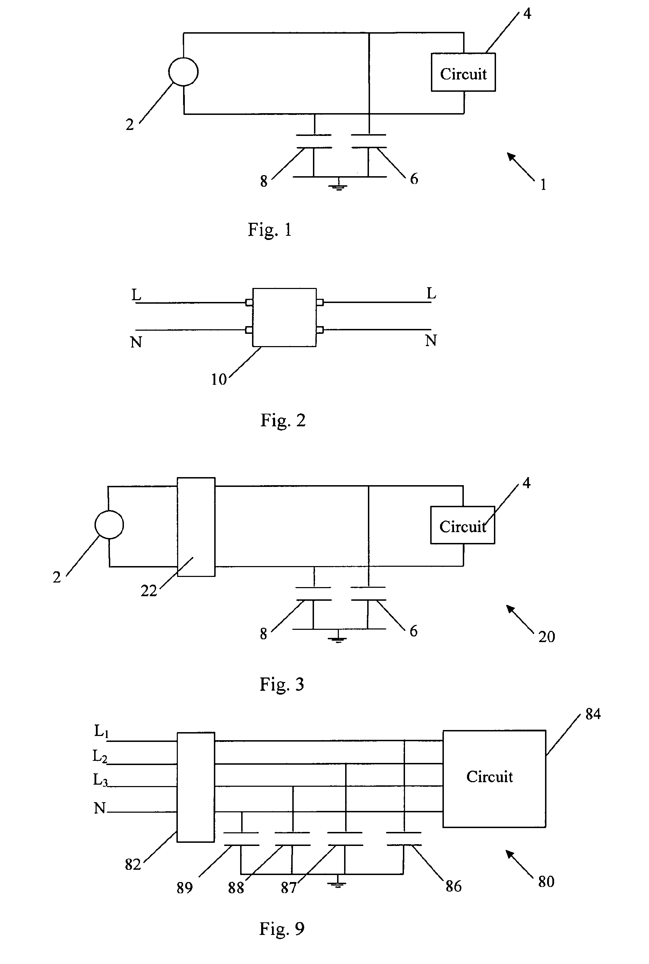

Figure 1 shows a known filter arrangement, indicated generally by the reference numeral 1. The filter 1 comprises an AC voltage source 2 (such as a mains voltage source) and a circuit 4. As shown, the AC voltage source 2 has a first terminal and a second terminal. A first capacitor 6 is connected between the first terminal and a ground (or earth) connection. A second capacitor 8 is connected between the second terminal and the ground/earth connection. The capacitors 6 and 8 are used to filter mains noise in a manner well known in the art and may be provided as an electromagnetic compatibility (EMC) filter.

Figure 2 shows a known residual current device (RCD), indicated generally by the reference numeral 10. The RCD 10 receives live and neutral power supply connections and provides live and neutral power supplies at an output.

The RCD 10 acts as a summing transformer, with the currents flowing through the live power supply and the neutral power supply lines being summed. In the normal use of the RCD 10, the sum of the currents should be close to zero. In the event of a fault, the currents flowing can be considerably higher. If this occurs, then the RCD 10 activates a relay that disconnects the power supply from the circuit to which it is normally connected.

In this way, RCDs provide protection against electric shocks due to faults. RCDs typically disconnect power supplies at much lower currents than traditional mechanical fuses and are therefore generally considered to provide additional protection.

Figure 3 shows a filter arrangement, indicated generally by the reference numeral 20, that is similar to the filter arrangement 1 described above. The filter arrangement 20 comprises the AC voltage source 2, the circuit 4 and the first 6 and second 8 capacitors described above. In addition, the filter arrangement 20 includes a residual current device (RCD) 22, similar to the RCD 10 described above. The RCD 22 is provided between the AC supply 2 and the circuit 4.

As discussed above with reference to the RCD 10, if the sum of currents in the RCD is relatively high, then a fault may have occurred and, for safety reasons, the power supply should be disconnected. Such a fault could, for example, be caused by the accidental cutting of a power cable. Thus, in normal operation, the detection of a current below the threshold (i.e. approaching zero) indicates normal operation.

However, in the circuit 20, the sum of the currents flowing through the RCD 22 will not be zero, due, in part, to the filtering capacitors 6 and 8. Moreover, in the event that the ground connection shown in the circuit 20 is missing, then the capacitors 6 and 8 will have no effect and so the currents flowing through the RCD will generally sum to zero.

Thus, the inventor has realised that in the circuit 20, if the ground connection in missing, then the current in the RCD 20 should sum to zero and this can be used as a means for detecting the absence of such a ground connection.

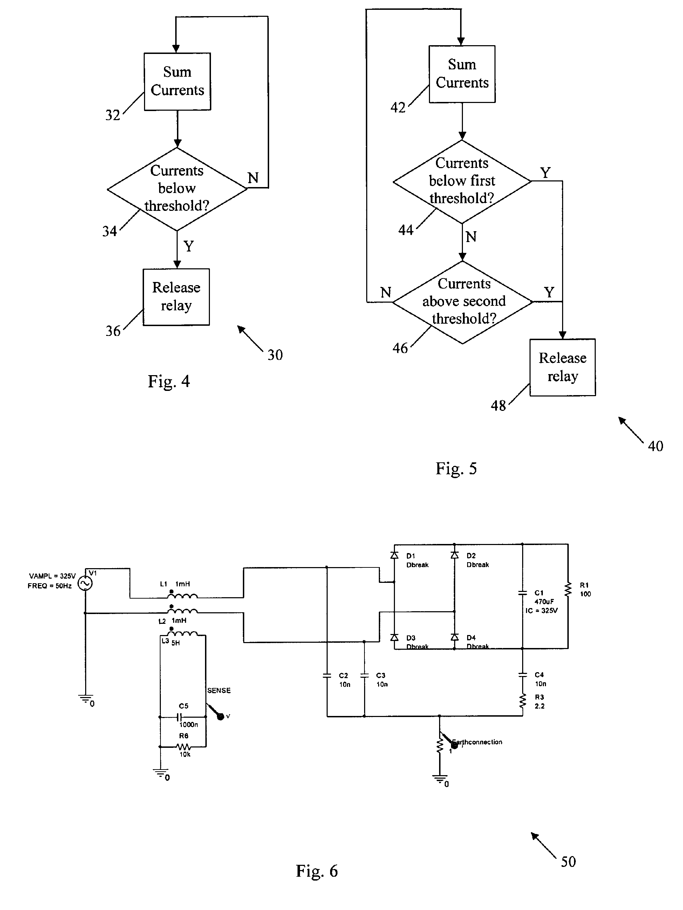

Figure 4 is a flow chart showing an algorithm, indicated generally by the reference numeral 30, showing an exemplary operation of the circuit 20 in accordance with an aspect of the present invention.

The algorithm 30 starts at step 32 where the currents flowing into and out of the residual current device (RCD) 22 are summed. Thus, in the configuration shown in Figure 3, the current flowing through the positive and neutral power lines are summed.

Next, at step 34, it is determined whether the sum of currents flowing in the RCD 22 is below a first current threshold. In an exemplary embodiment of the invention, the first current threshold is 0.5 mA. Of course, other current levels could be provided as the first current threshold.

If the sum of currents flowing in the RCD is below the first current threshold, then this is indicative of the absence of the ground connection. In the algorithm 30, this results in a relay within the RCD 22 being released to disconnect the power supply (step 36 of the algorithm 30).

If the sum of currents flowing in the RCD is above the first current threshold, then this is indicative of the presence of the ground connection. In the algorithm 30, this results in the algorithm returning to the start (i.e. to step 32).

The algorithm 30 can be used in conjunction with the normal use of an RCD, as shown in the algorithm 40 shown in Figure 5.

The algorithm 40 starts at step 42, where, as described above, the currents flowing into and out of the RCD 22 are summed. Next, at step 44, it is determined whether the sum of currents flowing in the RCD 22 is below the first current threshold. In an exemplary embodiment of the invention, the first current threshold is 0.5 mA. Of course, other currents levels could be used as the first current threshold.

If the sum of currents flowing in the RCD is below the first current threshold, then the algorithm 40 moves to step 48, where the relay within the RCD 22 is released to disconnect the power supply. If the sum of currents flowing in the RCD is above the first current threshold, then the algorithm 40 moves to step 46.

At step 46, it is determined whether the sum of the currents flowing in the RCD is above a second current threshold. In an exemplary embodiment of the invention, the second current threshold is 20 mA. Of course, other current levels could be provided as the second current threshold.

If the sum of the currents is above the second current threshold, then the algorithm 40 moves to step 48, where, as indicated above, the relay within the RCD is released to disconnect the power supply. If the sum of the currents is below the second threshold, then the algorithm returns to step 42.

Thus, the algorithm 40 disconnects the power supply if the sum of the currents is either below the first threshold or above the second threshold. In the exemplary embodiments described above, the algorithm 40 may be arranged to maintain the power supply in the event that the sum of currents is between 5mA and 20mA. Of course, the order of the steps 44 and 46 in the algorithm 40 could be reversed.

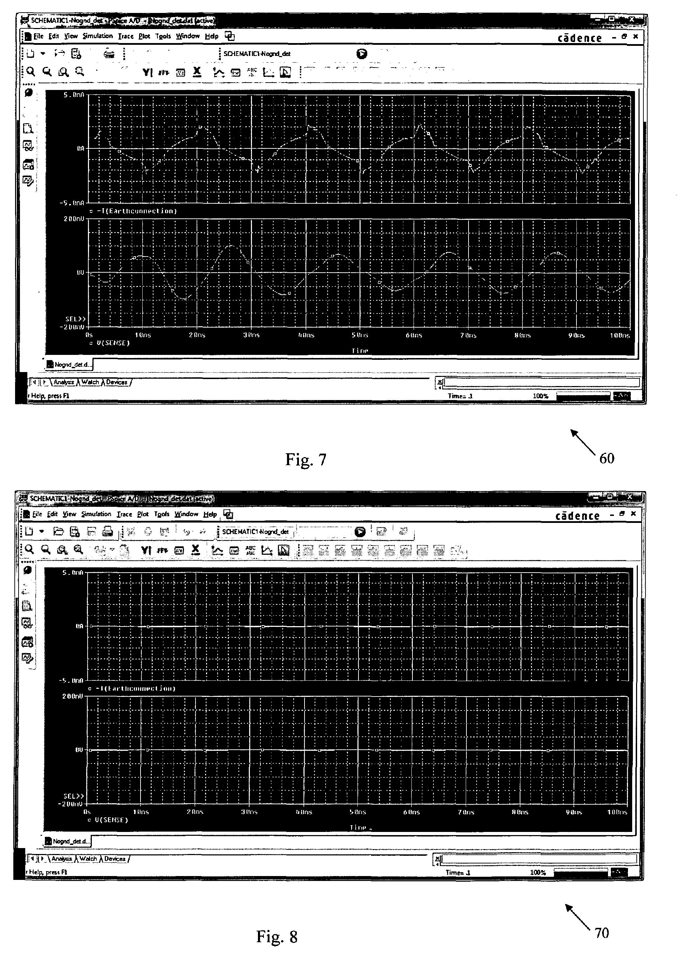

Figure 6 shows a circuit, indicated generally by the reference numeral 50, used for simulating the present invention. Figures 7 and 8 show the results of simulations using the exemplary circuit 50.

The circuit 50 includes an AC power supply providing a 50Hz input having a peak voltage of 325 volts. The live a neutral conductors of the power supply are shown connected to first and second inductors respectively; those inductors implement the summing transformer, together with a third (larger) measuring inductor L3. The live conductor is coupled to ground via a first Y-capacitor (C2): the neutral conductor is coupled to ground via a second Y-capacitor (C3). The circuit also includes four diodes provided as a rectifier circuit and a load.

The Y-capacitors are connected to ground via a resistor. In the simulation of the circuit, the resistance of the resistor is either almost zero (representing a good ground connection) or extremely high (representing a poor ground connection).

Figure 7 shows results (indicated generally by the reference numeral 60) of a simulation of the circuit of Figure 6 when the resistance is very low (e.g. 1 ohm), thereby simulating the operation of the circuit with a good ground connection. The upper plot in Figure 7 shows the simulated current flowing through the ground resistor. The lower plot shows the SENSE voltage at the inductor L3. As in clearly shown in Figure 7, the ground connection results in a voltage being generated at the inductor L3.

Figure 8 shows results (indicated generally by the reference numeral 70) of a simulation of the circuit of Figure 6 when the resistance is very high (perhaps 10 Megohm), thereby simulating the operation of the circuit with a poor ground connection. The upper plot in Figure 8 shows the simulated current flowing through the ground resistor. The lower plot shows the SENSE voltage at the inductor L3. As in clearly shown in Figure 8, the poor ground connection results in almost no voltage being generated at the inductor L3.

The simulations 60 and 70 demonstrate that a voltage is induced when the ground connection is provided. This voltage can readily be detected and used to indicate that the ground connection is good.

The invention has been described above with reference to a 1-phase AC power supply. Of course, the principles of the invention could be applied to multiphase AC supplies, such as commonly used 3-phase supplies. In the event that Y-capacitors are provided in conjunction with a 3-phase supply, then a separate capacitor would be provided between each of the live conductors of the 3-phase supply and ground and between the neutral conductor and ground.

An exemplary 3-phase system is shown, indicated generally by the reference numeral 80, in Figure 9. The system 80 comprises three live conductors (L1, L2 and L3) and a neutral conductor (N) configured to provide AC power to a circuit 84. The conductors are passed through a residual current device (RCD) 82. The circuit 80 additionally includes four Y-capacitors. First capacitor 86, second capacitor 87 and third capacitor 88 are provided between the first, second and third live conductors and ground respectively. A fourth capacitor 89 is provided between the neutral conductor and ground.

In use, the RCD 82 sums the currents from the live conductors and the neutral conductor. As discussed above, a current below a first threshold voltage is indicative of the absence of a ground connection.

The embodiments of the invention described above are provided by way of example only. The skilled person will be aware of many modifications, changes and substitutions that could be made without departing from the scope of the present invention. The claims of the present invention are intended to cover all such modifications, changes and substitutions as fall within the spirit and scope of the invention.

## Claims

1. A method comprising:
providing AC power from a power supply to a live and a neutral conductor of a circuit, wherein the live and neutral conductors are configured to pass through a current measurement transformer;
determining the sum of the currents in the live and neutral conductors; and
determining whether the sum of the currents is below a first predetermined threshold.

2. A method as claimed in claim 1, further comprising providing a first output indicative of whether the sum of currents is below the first predetermined threshold.

3. A method as claimed in claim 1 or claim 2, further comprising disconnecting the live and neutral conductors from the power supply in the event that the sum of the currents is below the first predetermined threshold.

4. A method as claimed in any one of claims 1 to 3, further comprising determining whether the sum of the currents is above a second predetermined threshold.

5. A method as claimed in claim 4, further comprising disconnecting the live and neutral conductors from the power supply in the event that the sum of the currents is above the second predetermined threshold.

6. A method as claimed in any preceding claim, wherein a first capacitor is connected between the live conductor and a ground connection and a second capacitor is connected between the neutral conductor and the ground connection.

7. A method as claimed in any preceding claim, wherein AC power is provided to a plurality of live conductors and wherein the current transformer is configured to detect the sum of currents flowing through the plurality of live conductors and the neutral conductor.

8. A circuit comprising:
a current measurement transformer configured to detect the sum of currents flowing through a live conductor and a neutral conductor; and
a module for indicating whether the sum of currents is below a first predetermined threshold.

9. A circuit as claimed in claim 8, further comprising a first capacitor connected between the live conductor and a ground connection and a second capacitor connected between the neutral conductor and the ground connection.

10. A circuit as claimed in claim 8 or claim 9, further comprising a relay for disconnecting the live and neutral conductors from a power supply in the event that the sum of currents is below the first predetermined threshold.

11. A circuit as claimed in any one of claims 8 to 10, further comprising a second module for indicating whether the sum of currents is above a second predetermined threshold.

12. A circuit as claimed in claim 11, wherein a relay is further configured to disconnect the live and neutral conductors from the power supply in the event that the sum of currents is above the second predetermined threshold.

13. A circuit as claimed in any one of claims 8 to 12, further comprising a plurality of live conductors, wherein the current transformer is configured to detect the sum of currents flowing through the plurality of live conductors and the neutral conductor.

14. A circuit as claimed in claim 13, further comprising a capacitor connected between each of the live conductors and a ground connection and a further capacitor connected between the neutral conductor and the ground connection.

15. A method comprising:
providing AC power from a power supply to one or more live conductors and a neutral conductor of a circuit, wherein the one or more live conductors and the neutral conductors are configured to pass through a current measurement transformer;
determining the sum of the currents in the one of more live conductors and neutral conductor; and
determining whether the sum of the currents is below a first predetermined threshold.
